# EUROPEAN PATENT SPECIFICATION

(11) **EP 3 332 920 B1**
(45) Date of publication and mention of the grant of the patent: **24.07.2019**
(21) Application number: 17161225.2
(22) Date of filing: 15.03.2017
(51) Int. Cl.: B25H 1/00, B23P 19/10, B25B 21/00

(54) **SMART POWER TOOL**
INTELLIGENTES ELEKTRISCHES WERKZEUG
OUTIL ÉLECTRIQUE INTELLIGENT

(30) Priority: 12.12.2016 IN 201641042323
(43) Date of publication of application: 13.06.2018
(73) Proprietor: Wipro Limited, 560 035 Karnataka (IN)
(72) Inventor: KUMAR, Vijay, 560 100 Bangalore (IN); NINAN, Thomas Chittakattu, 670 706 Kerala (IN)
(74) Representative: Finnegan Europe LLP

(56) References cited:
- EP-A2- 2 078 590
- EP-A2- 2 308 648
- JP-A- 2011 131 330
- US-A- 3 824 674
- US-A- 3 893 217
- US-B1- 6 301 997

## Description

### FIELD OF THE INVENTION

Present disclosure generally relates to a category of drive tools. Particularly, but not exclusively the present disclosure relates to an automated drive tool. Further embodiments of the present disclosure disclose a smart drive tool having an arrangement for operating a fastener with respect to a fastening surface.

### BACKGROUND

A drive tool is a device which may be commonly used in a wide variety of applications including industrial, construction, maintenance, plumbing, carpentry, and the like. Such tools are known from JP2011131330, US3893217A1 or US3824674A1. The drive tool may be operated either with the aid of power, categorized under power tools, or may be operated manually. Drive tools which are operated manually require skill of an operator, and the result of such use of those drive tools depends entirely on the skill of the operator. While the use of manually operated drive tools may be acceptable in some applications, in a wide variety of other applications reliability on labour skill may not be acceptable. Hence, usage of power tools is gaining popularity. A power tool is a tool that is actuated by an additional power source and a mechanism. The most common type of mechanism used to drive power tools is an electric motor.

One such commonly used drive tool is a screwdriver which may be used for the purposes of driving fasteners or screws. A typical screwdriver has a handle and a shaft, and a tip of the shaft may be inserted into the screw head to turn the screw manually. Such manual screwdrivers need skilled operators for aligning orientation of the screw and manual effort for driving the screw. Thus, the perfection and quality of screw fitment is mainly dependent on the skill of the operator. To overcome some limitations of manual screwdrivers, powered screwdrivers have been developed and used in the art. The powered screwdrivers include a means for rotating the shaft of the screwdriver, and thereby eliminates the manual effort required for driving the screw.

Conventionally known power screwdrivers may include a torque sensor for measuring the torque requirement and a motorized mechanism may be used to input the required torque. However, operation of conventionally known power screwdrivers still depends on the skill of the operator, which may lead to manual deficiencies. Additionally, since the conventional technologies involve manual intervention, the time taken for operation of such tools may be high.

The present disclosure is directed to overcome one or more limitations stated above.

### SUMMARY

One or more shortcomings of the conventional drive tools are overcome and additional advantages are provided through the present disclosure. Additional features and advantages are realized through the techniques of the present disclosure. Other embodiments and aspects of the disclosure are described in detail herein and are considered a part of the claimed disclosure.

In a non-limiting embodiment of the disclosure, a drive tool has been disclosed. The drive tool comprising a handle, a bit movably coupled to the handle through a mechanism. The drive tool further comprises a plurality imaging units provisioned on the handle to face a fastener and a fastening surface. There is a control unit operatively coupled to the mechanism and the plurality of imaging units. The control unit is configured to receive data from each of the plurality of imaging units and operate the mechanism selectively to move the bit for adjusting axis of the fastener perpendicular to the fastening surface. The adjustment is done based on the data received from at least one of the plurality of imaging units.

In an embodiment, the mechanism comprises a first actuator and a second actuator to move the bit in lateral and longitudinal directions based on the signal received from the plurality of imaging units. The drive tool further comprises a third actuator coupled to the bit to fasten the fastener.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING FIGURES

The accompanying drawings, which are incorporated in and constitute a part of this disclosure, illustrate exemplary embodiments and, together with the description, serve to explain the disclosed principles. The same numbers are used throughout the figures to reference like features and components. Some embodiments of device and/or methods in accordance with embodiments of the present subject matter are now described, by way of example only, and with reference to the accompanying figures, in which:
**FIG.1** shows a block diagram of components of a drive tool in accordance with some embodiments of the present disclosure;
**FIG.2** shows a schematic representation of the drive tool in accordance with some embodiments of the present disclosure;
**FIG.3a, FIG.3b** and **FIG.3c** show exemplary representations of different stages of operation of a mechanism in the drive tool of FIG.2 in accordance with some embodiments of the present disclosure; and
**FIG.4** illustrates a flowchart showing method to align and drive the drive tool to operate the fastener with respect to a fastening surface in accordance with some embodiments of the present disclosure.

It should be appreciated by those skilled in the art that any block diagrams herein represent conceptual views of illustrative device embodying the principles of the present subject matter. Similarly, it will be appreciated that any flow charts, flow diagrams, state transition diagrams, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the scope of the disclosure.

The terms "comprises", "comprising", or any other variations thereof, are intended to cover a non-exclusive inclusion, such that device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

The present disclosure discloses a smart drive tool, such as, but not limited to, a screwdriver. In an embodiment, the drive tool may be power driven to adjust an orientation of a fastener and subsequently fasten or unfasten the fastener with respect to fastening surface. The configuration of automatic alignment and fastening or unfastening in the drive tool of the present disclosure overcomes some of the problems mentioned above, including dependency on the skill of an operator of the drive tool. The fastener is preferably a threaded fastener. For example, the fastener may be a screw, a bolt or a nut.

The drive tool of the present disclosure comprises a handle, to enable user to hold the drive tool during its operation. The drive tool further comprises a bit, which is coupled to the handle through a mechanism. The term mechanism preferably refers to one or more components that are capable of driving the fastener. For example, the mechanism may be configured to rotate the fastener. In an embodiment, the drive tool is a screwdriver. The bit of the screwdriver may be made of steel, and may comprise a tip which is hardened to resist wear. The tip may be inserted into a screw head to turn it. In one embodiment of the present disclosure, the bit is coupled to the handle, such that the bit may be movably adjusted through the mechanism.

The drive tool also comprises a plurality of imaging units, which face the fastener and a fastening surface on which the fastener is to be fastened or from which the fastener is to be removed. The term imaging unit preferably refers to a device that is capable of acquiring an image, such as an image of at least a part of the fastener and/or the fastening surface. For example, the imaging unit may comprise a camera. In an embodiment, the plurality of imaging units comprises a depth camera, such as RGB-D camera.

The drive tool further comprises a control unit operatively coupled with the mechanism and the plurality of imaging units. The control unit is configured to receive data from each of the plurality of imaging units, the data may be in the form of distance between the fastening surface and different faces of head of the fastener. The data, so received by the control unit may be different from each of the plurality of imaging units, indicating that there is a tilt in axis of the fastener with respect to the fastening surface. For effective fastening or unfastening, the fastener and also the bit are to be perpendicular to the fastening surface. This perpendicularity is realized through the control unit which operates the mechanism to move the bit and adjust the axis of the fastener in a direction perpendicular to the fastening surface. The control unit identifies the perpendicular condition based on the inputs received from the plurality of imaging units. In an embodiment, the fastening surface is perpendicular to the axis of the fastener or the screw, when the distance data between the fastening surface and different faces of head of the fastener is found to be equal. Thus, when the distance is found to be equal, the control unit interprets it as removal of tilts and stops the operation of the mechanism. Subsequently, the fastener is fastened to the fastening surface.

In an embodiment, once the fastener is aligned perpendicular to the fastening surface, the distance data between different faces of the fastener and the fastening surface may also be used in identification of the completion of fastening operation. In an embodiment, the fastening operation may be considered to be completed when the distance between the fastening surface and the head of the fastener is zero. Further, in another embodiment of the disclosure, an accelerometer may be used to identify completion of the fastening or the unfastening operation by detecting sudden change in acceleration at the end of fastening or unfastening operation.

In the following detailed description of the embodiments of the disclosure, reference is made to the accompanying figures that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

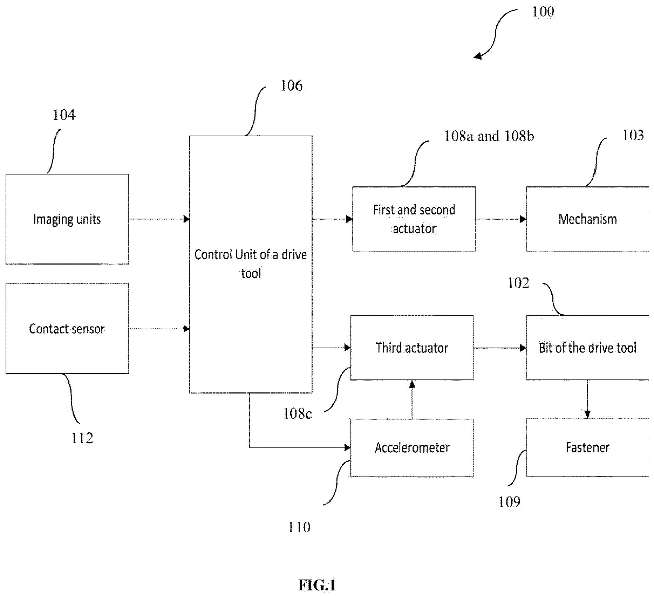

**FIG.1** shows a block diagram, illustrating components of a drive tool **100** which may automatically align and drive the fastener with respect to the fastening surface in accordance with some embodiments of the present disclosure.

In an exemplary implementation, as shown in **FIG.1****,** the drive tool **100** comprises a control unit **106,** plurality of imaging units **104,** a contact sensor **112,** a first actuator **108a** and a second actuator **108b,** a third actuator **108c,** a mechanism **103** in addition to handle **101** and a bit **102.**

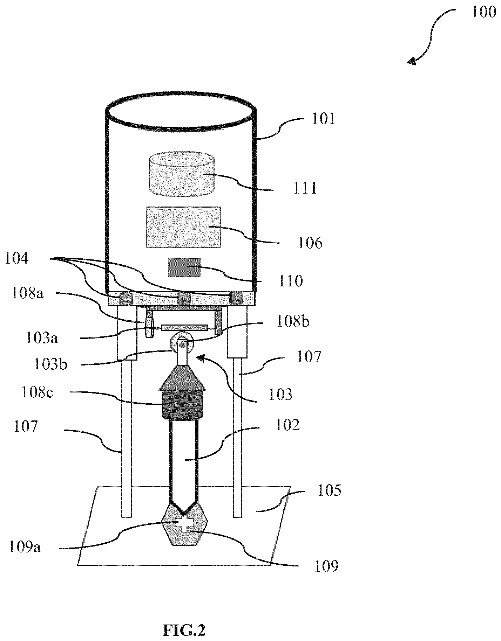

As shown in **FIG.1****,** the contact sensor **112** of the drive tool **100** is configured to detect contact between the bit **102** and a fastener **109.** In an embodiment of the present disclosure, the bit **102** comes in contact with a head portion **109a** (shown in FIG.2) of the fastener **109.** The contact sensor **112** is provisioned on the bit **102** and in one embodiment the contact sensor **112** may be provisioned at a tip of the bit **102.** The contact sensor **112** is interfaced with the control unit **106** of the drive tool **100** and upon detection of the fastener **109,** the contact sensor **112** generates a signal to the control unit **106.** The signal received by the control unit **106** acts as an indication to activate at least one extendable and retractable arm **107** (shown in FIG.2). In an embodiment, the extendable and retractable arm 107 extends from a handle **101** (shown in FIG.2) till a fastening surface **105** (shown in FIG.2) to support the drive tool **100** during fastening and unfastening operation of the fastener **109.**

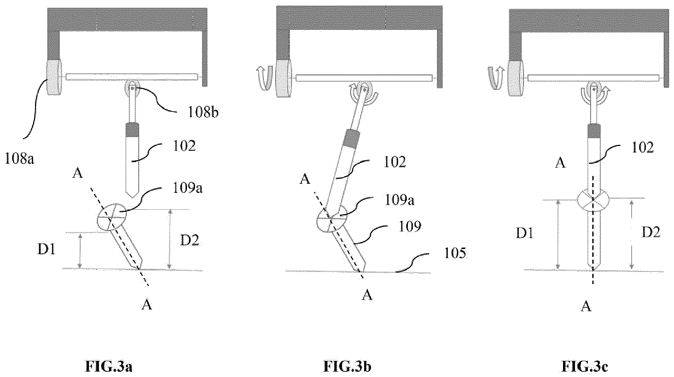

Further, as shown in **FIG.1****,** the drive tool **100** comprises a plurality of imaging units **104.** In an embodiment, the plurality of imaging units **104** may be mounted on the handle **101** of the drive tool, and the plurality of imaging units **104** includes RGB-D camera. The RGB-D camera, also referred to as depth camera, is used to obtain depth information. The plurality of imaging units **104** are interfaced with the control unit **106** and are configured to generate data to be transmitted to the control unit **106.** In one embodiment, at least two imaging units **104** are provisioned on the handle **101** facing the fastening surface **105** and the fastener **109.** However, one should not construe the number of imaging units **104** as a limitation, as any number of imaging units may be provided on the handle **101** to serve the purpose. In an embodiment, each of the plurality imaging units **104** is configured to measure distance between the fastening surface **105** and different faces of head of the fastener **109a.** The distance data is received by the control unit **106** to identify if there is any tilt in the axis **A-A** (shown in FIG. 3) of the fastener **109** with respect to the fastening surface **105.** For example, if at least one of the plurality of imaging units **104** generate distance data different from the other, the control unit **106** may interpret the same as a tilt in the axis **A-A** of the fastener **109** with respect to the fastening surface **105.** A person skilled in the art would understand that the distance data mentioned above may also include various other distance data and is not limited to the things mentioned herein.

To effectively fasten the fastener **109** onto the fastening surface **105** or during unfastening, the axis **A-A** of the fastener **109** is to be perpendicular to the fastening surface **105.** To achieve this, the drive tool **100** is provisioned with the mechanism **103** coupled to the handle **101** and the bit **102.** In an embodiment, the mechanism **103** is actuated by the control unit **106** through a first actuator **108a** and a second actuator **108b.** The mechanism **103** may be configured to move the bit **102** laterally and longitudinally to adjust the axis **A-A** of the fastener **109** perpendicular to the fastening surface **105.** In an embodiment, the first actuator **108a** may be used to move the bit **102** laterally and the second actuator **108b** to move the bit longitudinally. Hence, upon analysis by the control unit **106,** if there is a tilt in the axis **A-A** of the fastener **109** or screw with respect to the fastening surface **105,** the mechanism **103** operates the bit **102** until the axis **A-A** of the fastener **109** is brought to a position perpendicular to the fastening surface **105.**

In an embodiment, the drive tool **100** is subsequently used to fasten the fastener **109** to the fastening surface **105** or may be used to unfasten the fastener **109** from the fastening surface **105.** The operation of fastening is carried out once axis **A-A** of the fastener **109** is aligned perpendicular to the fastening surface **105.** The fastening of the fastener **109** is done through the third actuator **108c** upon activation by the control unit **106.** The third actuator **108c** rotates the fastener **109** to fasten to the fastening surface **105.** In an embodiment, the plurality of imaging units **104** or an accelerometer **110** may be used by the drive tool **100** to identify the completion of fastening or unfastening operation. In one embodiment, the plurality of imaging units **104** may continuously measure distance between the head portion of the fastener **109a** and the fastening surface **105** and is fed to the control unit **106.** The control unit **106** analyses these values and upon distance reaching the value of zero which is an indication of the completion of fastening operation, the third actuator **108c** is deactivated by the control unit **106.** Further, in case of accelerometer **110,** completion of fastening or unfastening operation may be identified by the control unit **106** by detecting a change in acceleration of the drive tool **100.** The accelerometer **110** interfaced with the control unit **106** is configured to receive data from the accelerometer **110** continuously, and when there is a substantial change in these values, the third actuator **108c** is deactivated. The substantial change in acceleration occurs when the fastener **109** is completely fastened to the fastening surface **105** or after completion of unfastening.

In an embodiment, the drive tool **100** is a screwdriver, the screwdriver used to fasten the screw on the screwing surface or unscrew from the screwing surface. It is to be understood that, the drive tool **100** of the present disclosure, may be used in other applications as well and use as a screwdriver should not be construed as any form of limitation of the present disclosure.

Referring now to **FIG.2****,** it shows a schematic representation of the drive tool **100** in accordance with some embodiments of the present disclosure. As shown in **FIG.2****,** the drive tool **100** comprises a handle **101** to enable the user to hold the tool **100** during its operation. The drive tool **100** further comprises a bit **102,** which is coupled to the handle **101** through a mechanism **103.** In an embodiment, the bit **102** comes in direct contact with the fastener **109** or particularly with a head of the fastener **109a.** The contact of the bit **102** with the head of the fastener **109a** may be sensed by the contact sensor **112.** In an embodiment, the contact sensor **112** may be one of resistive or capacitive sensors which causes change in resistance or capacitance upon contact with the fastener **109.** The contact sensor **112** is interfaced with the control unit **106** and the control unit **106** upon receiving contact signal activates an extendable and retractable arm **107** to extend from the handle **101** to the fastening surface **105.** In an embodiment of the disclosure, the drive tool **100** comprises a pair of extendable and retractable arms **107** extending parallel to the bit **102.** The extendable and retractable arm **107** supports the drive tool **100** on the fastening surface **105** and ensures that there is no movement of the drive tool **100** during the fastening or unfastening operation. In an embodiment, the extendable and retractable arm **107** may be mechanically operated, or actuated hydraulically or pneumatically actuated with the aid of a power source **111.** The extendable and retractable arm **107** may use air suction to stick to the fastening surface **105.** The extendable and retractable arm **107** may also have a housing **107a** and a resilient member [not shown] may be disposed in the housing. The resilient member may be a compression spring which is configured to compress when the drive tool **100** is operated towards the fastening surface **105,** and retract when the force on the drive tool **100** is released. In one embodiment, the extendable and retractable arm **107** may be a telescopic arm. In one embodiment, the drive tool **100** may be a screwdriver, wherein the bit **102** of the screwdriver is made of a tough steel and there may be a tip which is hardened to resist wear. The tip is inserted into screw head to turn it and fasten or unfasten with respect to a fastening surface **105.**

In one embodiment of the present disclosure, the bit **102** may be coupled to the handle **101** such that the bit **102** may be movably adjusted through the mechanism **103.** In one embodiment, the mechanism **103** used may be a universal joint mechanism. The mechanism **103** comprises a bar **103a** coupled to the first actuator **108a,** and a flange **103b** joined to the bar **103a.** The flange **103b** extends downwardly from the bar **103a,** and houses a second actuator **108b.** The bit **102** of the drive tool **100** is movably coupled to the second actuator **108b.** In an embodiment, the first actuator **108a** and second actuator **108b** rotates to provide lateral and longitudinal directional movement to the bit **102** of the drive tool **100.** The drive tool **100** also comprises a plurality of imaging units **104** provided on the handle **101** facing the fastener **109** and the fastening surface **105** on which the fastener **109** is to be fastened or from which the fastener **109** is to be removed. In an embodiment, the plurality of imaging units **104** may be RGB-D cameras.

Further, as described in description of FIG.1, the drive tool **100** further comprises a control unit **106** operatively coupled with the mechanism **103** and the plurality of imaging units **104.** The control unit **106** may be configured to receive data from each of the plurality of imaging units **104** which is configured to measure distance between the fastening surface **105** and one or more faces on the head of the fastener **109a.** The control unit **106** receives the distance data from the plurality of imaging units **104,** and checks the orientation of the fastener **109** or screw with respect to the fastening surface **105.** In an embodiment, the control unit **106** identifies tilt in the axis **A-A** of fastener **109** with respect to the fastening surface **105.** For example, if at least one of the plurality of imaging units **104** generate distance data different from the other, the control unit **106** may interpret the same as a tilt in the axis **A-A** of the fastener **109** with respect to the fastening surface **105.** In an embodiment, for effective fastening or unfastening, the fastener **109** and the bit **102** are to be perpendicular to the fastening surface **105.** This perpendicularity and removal of tilt may be realized through the control unit **106** which operates the mechanism **103** by providing lateral and longitudinal movement of the bit **102** with respect to the fastening surface **105.** The lateral and longitudinal movements may be provided through the first and second actuators **108a** and **108b.** This way the axis **A-A** of the fastener **109** is adjusted in a direction perpendicular to the fastening surface **105.** The control unit **106** identifies the perpendicular condition based on the inputs received from the plurality of imaging units **104.** In an embodiment, the fastening surface **105** is perpendicular to the axis **A-A** of the fastener **109,** when the distance data between the fastening surface **105** and each of the different faces of the head of the fastener **109a** is found to be equal. Thus, when the distance is found to be equal, the control unit **106** stops the operation of the first and second actuators **108a** and **108b** and subsequently the fastener **109** is fastened to the fastening surface **105** by the operation of the bit **102** through the third actuator **108c.**

In an embodiment, the plurality of imaging units **104** may also be used in identification of the completion of fastening operation. In an embodiment, the fastening operation may be considered complete, when the distance between the fastening surface **105** and the head of the fastener **109a** is zero. Further, in another embodiment of the disclosure, an accelerometer **110** may also be used to identify completion of fastening or unfastening operation by detecting instant change in acceleration which typically occurs at the end of fastening or unfastening operation of the drive tool **100.** The signal from the accelerometer **110** may be used by the control unit **106** to stop the operation of the third actuator **108c.** In an embodiment, the necessary power for operation of different components of the drive tool **100,** which includes the plurality of depth sensors **104,** the contact sensors **112,** the control unit **106,** the at least one first actuator **108a,** the second actuator **108b** and the third actuator **108c** may be provided by the power source **111.** The power source **111** may be a battery which is rechargeable, or a replaceable battery.

Referring now to **FIG.3a, FIG.3b** and **FIG.3c****,** these figures show exemplary representations of different stages of operation of the mechanism **103** in the drive tool **100** in accordance with some embodiments of the present disclosure.

As shown in **FIG.3a****,** initially the distance measured by the plurality of imaging units **104** between the fastening surface **105** and different faces of the head of the fastener **109a,** represented herein as D1 and D2 are different. In an embodiment, two faces of the head of the fastener **109a** are considered for simplicity, however, more than two faces may be considered for measuring distance between the fastening surface **105** and the head of the fastener **109a.** The distance D1 and D2 are measured from the head portion **109a** of the fastener 109 and the fastening surface 105. The varying distances, is an indication that there is a tilt in the fastener 109 with respect to the fastening surface 105. The control unit 106 upon receiving this data and identifying the tilt of the fastener 109, the control unit 106 activates the at least one first actuator 108a and the second actuator 108b to actuate the mechanism 103.

As depicted in FIG.3b, the at least one first actuator 108a and second actuator 108b rotates to provide lateral and longitudinal directional movement to the bit 102 of the drive tool **100.** The bit **102** in **FIG.3b****,** is moved laterally to come in contact with the head of the fastener **109a.** In another embodiment, the bit **102** may be moved laterally and longitudinally to come in contact with the head of the fastener **109a.**

Further, as shown in **FIG.3c****,** the bit **102** is moved laterally again, along with the fastener **109** to make the axis **A-A** of the fastener **109** perpendicular to the fastening surface **105** to ensure effective fastening operation from then on. As shown in **FIG.3c****,** the distance D1 is equal to D2, which is an indication to the control unit **106** that the fastener **109** is perpendicular to the fastening surface **105** and there are no tilts in the drive tool **100.**

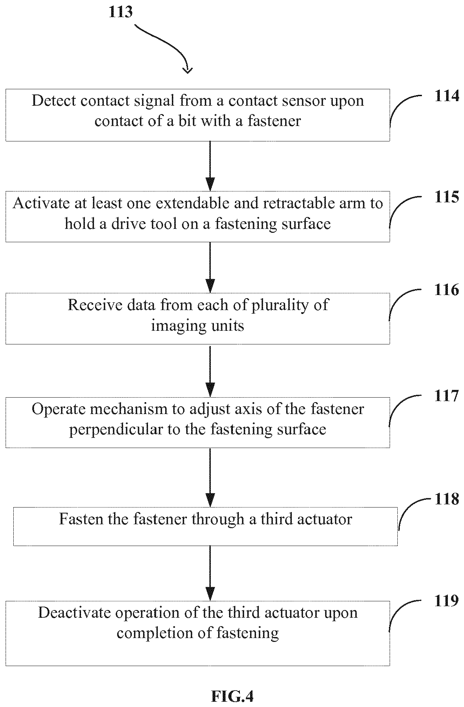

**FIG.4** illustrates a flowchart showing method for adjusting the drive tool **100** to fasten the fastener **109** in accordance with some embodiments of the present disclosure.

As illustrated in **FIG.4****,** the method **113** comprises one or more blocks for adjusting the drive tool **100** and fastening or unfastening the fastener **109.** The method **113** may be described in the general context of computer executable instructions. Generally, computer executable instructions can include routines, programs, objects, components, data structures, procedures, modules, and functions, which may perform particular functions or implement particular abstract data types.

The order in which the method **113** is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At block **114,** a contact sensor **112** of the drive tool **100** is configured to sense contact of a bit **102** of the drive tool **100** with a fastener **109,** particularly head of the fastener 109a. Upon contact, the contact sensor 112 sends a contact signal to the control unit 106 for its detection.

At block 115, once the contact has been detected by the control unit 106, the control unit 106 activates at least one extendable and retractable arm 107 to extend from the handle 101 to a fastening surface 105 to support the drive tool on the fastening surface 105.

At block 116, a plurality of imaging units 104 provisioned in the handle of the drive tool 100 are configured to generate data related to distance between the fastening surface **105** and different faces of the head of the fastener **109a.** The distance data, so generated by the plurality of imaging units **104** are received by the control unit **106** to identify tilt in the axis **A-A** of the fastener **109** or screw, if any.

At block **117,** if any tilts are identified by the control unit **106,** it operates a mechanism **103** to adjust axis **A-A** of the fastener **109** perpendicular to the fastening surface **105.** In an embodiment, the mechanism **103** may be a universal joint mechanism. In an embodiment, for effective fastening or unfastening, the fastener **109** and the bit **102** are to be perpendicular to the fastening surface **105.** Hence, the mechanism **103** adjusts the fastener **109** with lateral and longitudinal movement of the bit **102** to make it perpendicular to the fastening surface **105.**

At block **118,** upon adjusting of the fastener **109** by the mechanism **103,** the control unit **106** actuates a third actuator **108c** to carry out the process of fastening or unfastening the fastener **109** with respect to the fastening surface **105.** The third actuator **108c** turns the fastener **109** to fasten the fastener **109** on the fastening surface **105.**

At block 119, once the operation of fastening or unfastening of the fastener 109 is complete, the third actuator 108c is deactivated by the control unit 106. In an embodiment, the plurality of imaging units 104 or an accelerometer 110 may be used (as described in FIG.2 description) by the drive tool 100 to identify the completion of fastening operation.

In an embodiment of the disclosure, the control unit 106 of the drive tool 100 may include specialized processing units such as integrated system (bus) controllers, memory management control units, floating point units, graphics processing units, digital signal processing units, etc. The processing unit may include a microprocessor, such as AMD Athlon, Duron or Opteron, ARM's application, embedded or secure processors, IBM PowerPC, Intel's Core, Itanium, Xeon, Celeron or other line of processors, etc. The control unit may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), microcontroller, etc.

In some embodiments, the control unit **106** may be disposed in communication with one or more memory devices (e.g., RAM, ROM etc.) via a storage interface. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computing system interface (SCSI), etc. The memory drives may further include a drum, magnetic disc drive, magneto-optical drive, optical drive, redundant array of independent discs (RAID), solid-state memory devices, solid-state drives, etc.

Advantages of embodiments of the present disclosure are summarized in the following paragraphs.

In an embodiment, the present disclosure discloses a drive tool to fasten or unfasten the fastener with respect to the fastening surface.

In an embodiment, the drive tool of the present disclosure may be sued to align the fastener perpendicular to the fastening surface to ensure effective and quick fastening or unfastening operation.

In an embodiment, the present disclosure provides an automatic method of aligning the drive tool and fasten or unfasten the fastener, thus eliminating the requirement of a skilled operator.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A drive tool (100), comprising:
a handle (101);
a bit (102) movably coupled to the handle (101) through a mechanism (103);
a plurality of imaging units (104) provisioned on the handle (101), wherein the plurality of imaging units (104) face a fastener (109) and a fastening surface (105);
**characterized by**
a control unit (106) operatively coupled to the mechanism (103) and the plurality of imaging units (104), wherein the control unit (106) is configured to:
receive data from each of the plurality of imaging units (104); and
operate the mechanism (103) selectively to move the bit (102) for adjusting an axis (A-A) of the fastener (109) perpendicular to the fastening surface (105), based on the data received from at least one of the plurality of imaging units (104).

2. The drive tool (100) as claimed in claim 1, further comprising a contact sensor (112) provisioned on the bit (102), wherein the contact sensor (112) is configured to detect contact of the bit (102) with the fastener (109).

3. The drive tool (100) as claimed in claim 1 or claim 2, further comprising at least one extendable and retractable arm (107) to hold the drive tool (100) on the fastening surface (105).

4. The drive tool (100) as claimed in claim 3, wherein the control unit (106) is configured to actuate the at least one extendable and retractable arm (107) to extend up to the fastening surface (105), upon receiving a signal from the contact sensor (112).

5. The drive tool (100) as claimed in any of the preceding claims, wherein the plurality of imaging units (104) includes a depth camera.

6. The drive tool (100) as claimed in any of the preceding claims, wherein the plurality of imaging units (104) is configured to measure a distance between the fastening surface (105) and different faces of a head of the fastener (109a).

7. The drive tool (100) as claimed in any of the preceding claims, wherein the mechanism (103) comprises a first actuator (108a) and a second actuator (108b), and wherein the first actuator (108a) and the second actuator (108b) are interfaced with the control unit (106).

8. The drive tool 100 as claimed in claim 7, wherein the control unit (106) is configured to selectively operate the first actuator (108a) and the second actuator (108b) to move the bit (102) in lateral and longitudinal directions based on the data received from the plurality of imaging units (104).

9. The drive tool (100) as claimed in any of the preceding claims, further comprising a third actuator (108c) coupled to the bit (102), wherein the third actuator (108c) is interfaced with the control unit (106).

10. The drive tool (100) as claimed in claim 9, wherein the control unit (106) is configured to rotate the third actuator (108c) to fasten the fastener (109) to the fastening surface (105) upon adjusting the axis of the fastener (A-A) perpendicular to the fastening surface (105).

11. The drive tool (100) as claimed in claim 10, wherein the control unit (106) is configured to deactivate the third actuator (108c) upon the distance between the head of the fastener (109a) and the fastening surface (105) reaching zero.

12. The drive tool (100) as claimed in any of the preceding claims, further comprising an accelerometer (110) to detect a change in acceleration of the bit (102) during fastening.

13. The drive tool (100) as claimed in claim 12, wherein the accelerometer (110) is communicatively coupled to the control unit (106), the control unit (106) is further configured to deactivate, the third actuator (108c), upon receiving a signal from the accelerometer (110).

14. The drive tool (100) as claimed in any of the preceding claims, further comprising at least one power source (111) to supply power to the control unit (106), the contact sensor (112), the plurality of imaging units (104), the accelerometer (110), the first actuator (108a), the second actuator (108b) and/or the third actuator (108c).

## Patentansprüche

1. Antriebswerkzeug (100), umfassend:
einen Griff (101);
einen Einsatz (102), der beweglich an den Griff (101) durch einen Mechanismus (103) gekoppelt ist;
eine Vielzahl von Abbildungseinheiten (104), die auf dem Griff (101) bereitgestellt werden, wobei die Vielzahl der Abbildungseinheiten (104) einem Befestigungselement (109) und einer Befestigungsoberfläche (105) zugewandt ist; **gekennzeichnet durch** eine Steuereinheit (106), die funktionsfähig an den Mechanismus (103) und der Vielzahl von Abbildungseinheiten (104) gekoppelt ist, wobei die Steuereinheit (106) für Folgendes konfiguriert ist:
Empfangen von Daten aus jeder der Vielzahl von Abbildungseinheiten (104); und Betreiben des Mechanismus (103), um selektiv den Einsatz (102) zu bewegen, um die Achse (A-A) des Befestigungselements (109) senkrecht zu der Befestigungsoberfläche (105) einzustellen, basierend auf den empfangenen Daten aus zumindest einer der Vielzahl von Abbildungseinheiten (104).

2. Antriebswerkzeug (100) nach Anspruch 1, ferner umfassend einen Kontaktsensor (112), der auf dem Einsatz (102) bereitgestellt ist, wobei der Kontaktsensor (112) konfiguriert ist, um den Kontakt des Einsatzes (102) mit dem Befestigungselement (109) zu erfassen.

3. Antriebswerkzeug (100) nach Anspruch 1 oder 2, ferner umfassend zumindest einen ausziehbaren und einziehbaren Arm (107), um das Antriebswerkzeug (100) auf der Befestigungsoberfläche (105) zu halten.

4. Antriebswerkzeug (100) nach Anspruch 3, wobei die Steuereinheit (106) konfiguriert ist, um den zumindest einen ausziehbaren und einziehbaren Arm (107) zu aktivieren, um sich bis zu der Befestigungsoberfläche (105) zu erstrecken, beim Empfang eines Signals aus dem Kontaktsensor (112).

5. Antriebswerkzeug (100) nach einem der vorhergehenden Ansprüche, wobei die Vielzahl der Abbildungseinheiten (104) eine Tiefenkamera enthält.

6. Antriebswerkzeug (100) nach einem der vorhergehenden Ansprüche, wobei die Vielzahl der Abbildungseinheiten (104) konfiguriert ist, um eine Entfernung zwischen der Befestigungsoberfläche (105) und verschiedenen Flächen eines Befestigungskopfes (109a) zu messen.

7. Antriebswerkzeug (100) nach einem der vorhergehenden Ansprüche, wobei der Mechanismus (103) einen ersten Aktuator (108a) und einen zweiten Aktuator (108b) umfasst, und wobei der erste Aktuator (108a) und der zweite Aktuator (108b) mit der Steuereinheit (106) eine Schnittstelle bilden.

8. Antriebswerkzeug (100) nach Anspruch 7, wobei die Steuereinheit (106) konfiguriert ist, um selektiv den ersten Aktuator (108a) und den zweiten Aktuator (108b) zu betätigen, um den Einsatz (102) in Quer- und Längsrichtung zu bewegen, basierend auf den Daten, die aus der Vielzahl der Abbildungseinheiten (104) empfangen wurden.

9. Antriebswerkzeug (100) nach einem der vorhergehenden Ansprüche, ferner umfassend einen dritten Aktuator (108c), der an den Einsatz (102) gekoppelt ist, wobei der dritte Aktuator (108c) mit der Steuereinheit (106) eine Schnittstelle bildet.

10. Antriebswerkzeug (100) nach Anspruch 9, wobei die Steuereinheit (106) konfiguriert ist, um den dritten Aktuator (108c) zu drehen, um das Befestigungselement (109) an die Befestigungsoberfläche (105) zu befestigen, beim senkrechten Einstellen der Achse (A-A) des Befestigungselements zur Befestigungsoberfläche (105).

11. Antriebswerkzeug (100) nach Anspruch 10, wobei die Steuereinheit (106) konfiguriert ist, um den dritten Aktuator (108c) zu deaktivieren, wenn die Entfernung zwischen dem Kopf des Befestigungselements (109a) und der Befestigungsoberfläche (105) Null beträgt.

12. Antriebswerkzeug (100) nach einem der vorhergehenden Ansprüche, ferner umfassend ein Beschleunigungsmessgerät (110), um eine Änderung der Beschleunigung des Einsatzes (102) während des Befestigens zu messen.

13. Antriebswerkzeug (100) nach Anspruch 12, wobei das Beschleunigungsmessgerät (110) kommunikativ mit der Steuereinheit (106) gekoppelt ist, wobei die Steuereinheit (106) ferner konfiguriert ist, den dritten Aktuator (108c) beim Empfangen eines Signals aus dem Beschleunigungsmessgerät (110) zu deaktivieren.

14. Antriebswerkzeug (100) nach einem der vorhergehenden Ansprüche, ferner umfassend zumindest eine Stromquelle (111), um die Steuereinheit (106), den Kontaktsensor (112), die Vielzahl von Abbildungseinheiten (104), das Beschleunigungsmessgerät (110), den ersten Aktuator (108a), den zweiten Aktuator (108b) und/oder den dritten Aktuator (108c) mit Strom zu versorgen.

## Revendications

1. Outil d'entraînement (100), comprenant :
une poignée (101) ;
un embout (102) couplé de manière mobile à la poignée (101) par le biais d'un mécanisme (103) ;
une pluralité d'unités d'imagerie (104) prévues sur la poignée (101), dans lequel la pluralité d'unités d'imagerie (104) font face à une attache (109) et une surface d'attache (105) ; **caractérisé par** une unité de commande (106) couplée de manière opérationnelle au mécanisme (103) et la pluralité d'unités d'imagerie (104), dans lequel l'unité de commande (106) est configurée pour :
recevoir des données depuis chacune de la pluralité d'unités d'imagerie (104) ; et actionner le mécanisme (103) sélectivement pour déplacer l'embout (102) pour ajuster un axe (A-A) de l'attache (109) perpendiculaire à la surface d'attache (105), sur la base des données reçues depuis au moins l'une de la pluralité d'unités d'imagerie (104).

2. Outil d'entraînement (100) selon la revendication 1, comprenant en outre un capteur de contact (112) prévu sur l'embout (102), dans lequel le capteur de contact (112) est configuré pour détecter un contact de l'embout (102) avec l'attache (109).

3. Outil d'entraînement (100) selon la revendication 1 ou 2, comprenant en outre au moins un bras extensible et rétractable (107) pour maintenir l'outil d'entraînement (100) sur la surface d'attache (105).

4. Outil d'entraînement (100) selon la revendication 3, dans lequel l'unité de commande (106) est configurée pour actionner l'au moins un bras extensible et rétractable (107) pour s'étendre jusqu'à la surface d'attache (105), à la réception d'un signal en provenance du capteur de contact (112).

5. Outil d'entraînement (100) selon l'une quelconque des revendications précédentes, dans lequel la pluralité d'unités d'imagerie (104) inclue une caméra de profondeur.

6. Outil d'entraînement (100) selon l'une quelconque des revendications précédentes, dans lequel la pluralité d'unités d'imagerie (104) est configurée pour mesurer une distance entre la surface d'attache (105) et différentes faces d'une tête de l'attache (109a).

7. Outil d'entraînement (100) selon l'une quelconque des revendications précédentes, dans lequel le mécanisme (103) comprend un premier actionneur (108a) et un deuxième actionneur (108b), et dans lequel le premier actionneur (108a) et le deuxième actionneur (108b) sont interfacés avec l'unité de commande (106).

8. Outil d'entraînement (100) selon la revendication 7, dans lequel l'unité de commande (106) est configurée pour sélectivement actionner le premier actionneur (108a) et le deuxième actionneur (108b) pour déplacer l'embout (102) dans des directions latérale et longitudinale sur la base des données reçues depuis la pluralité d'unités d'imagerie (104).

9. Outil d'entraînement (100) selon l'une quelconque des revendications précédentes, comprenant en outre un troisième actionneur (108c) couplé à l'embout (102), dans lequel le troisième actionneur (108c) est interfacé avec l'unité de commande (106).

10. Outil d'entraînement (100) selon la revendication 9, dans lequel l'unité de commande (106) est configurée pour tourner le troisième actionneur (108c) pour attacher l'attache (109) à la surface d'attache (105) lors de l'ajustement de l'axe de l'attache (A-A) perpendiculaire à la surface d'attache (105).

11. Outil d'entraînement (100) selon la revendication 10, dans lequel l'unité de commande (106) est configurée pour désactiver le troisième actionneur (108c) lorsque la distance entre la tête de l'attache (109a) et la surface d'attache (105) atteint zéro.

12. Outil d'entraînement (100) selon l'une quelconque des revendications précédentes, comprenant en outre un accéléromètre (110) pour détecter un changement d'accélération de l'embout (102) pendant l'attache.

13. Outil d'entraînement (100) selon la revendication 12, dans lequel l'accéléromètre (110) est couplé de manière communicante à l'unité de commande (106), l'unité de commande (106) est en outre configurée pour désactiver le troisième actionneur (108c), lors de la réception d'un signal en provenance de l'accéléromètre (110).

14. Outil d'entraînement (100) selon l'une quelconque des revendications précédentes, comprenant en outre au moins une source d'alimentation (111) pour fournir une alimentation à l'unité de commande (106), au capteur de contact (112), à la pluralité d'unités d'imagerie (104), à l'accéléromètre (110), au premier actionneur (108a), au deuxième actionneur (108b) et/ou au troisième actionneur (108c).
